# EUROPEAN PATENT APPLICATION

(11) **EP 1 363 195 A1**
(43) Date of publication of application: **19.11.2003**
(21) Application number: 02712382.7
(22) Date of filing: 15.02.2002
(51) Int. Cl.: G06F 13/00, H04N 17/00, H04N 7/173, H04H 9/00

(54) **AUDIENCE RATING SURVEY SYSTEM**

(30) Priority: 20.02.2001 JP 2001044232; 23.10.2001 JP 2001324996
(71) Applicant: Sony Computer Entertainment Inc., Tokyo 107-0052 (JP)
(72) Inventor: HASHIMOTO, Minoru, Sony Computer Entertainment Inc, Tokyo 107-0052 (JP)
(74) Representative: Müller, Frithjof E., Dipl.-Ing.
(86) International application number: JP0201294
(87) International publication number: WO02067126

(57) **Abstract**

An audience rating survey apparatus acquires a user ID, which specifies a viewer/listener of a network-distributed program, a device ID which specifies a client terminal receiving the network-distributed program, and a program ID which specifies the network-distributed program, and carries out an audience rating survey of the network-distributed program based on the acquired IDs and characteristic parameters associated the acquired user ID. A network-distributed program receiving apparatus transmits a device ID which specifies itself, the user ID which specifies a viewer/listener of a network-distributed program, and the program ID which specifies the network-distributed program, to the audience rating survey apparatus every fixed time interval. This allows effective and accurate audience rating survey of, for example, an Internet-broadcasted program according to the present invention.

## Description

### TECHNICAL FIELD

The present invention relates to an audience rating survey method and apparatus, which are effective, for example, when surveying audience ratings for programs to be distributed via a communications network; a network-distributed program receiving method and apparatus; an audience rating survey system; a recording medium recorded with an audience rating survey program; a recording medium recorded with a control program for a network-distributed program receiving apparatus; an audience rating survey program; and a control program for a network-distributed program receiving apparatus.

### BACKGROUND ART

In recent years, services for distributing radio programs, television programs and specialized field programs and the like using, for example, what is commonly referred to as streaming distribution on the Internet, have been put to practical use. It is noted that distribution of radio programs and television programs using the Internet will be referred to as Internet broadcasting in the following description.

Meanwhile, what is referred to as an audience rating survey, which compiles the number of viewers/listeners for the respective program time slots, has been conventionally carried out for program broadcasting using typical broadcasting media of radio airwaves or television airwaves and the like. The audience rating survey has become an extremely important tool in determining, especially with programs running advertisements, the advertising effectiveness of those advertisements.

Accordingly, even in Internet broadcasting, it is similarly preferable to carry out an audience rating survey.

However, the conventionally performed audience rating survey can only compile the number of viewers/listeners for each program, and can not survey to the extent of such things as what kind of people are viewing/listening to a certain program. Therefore, it is especially difficult to accurately determine the advertising effectiveness of programs that run advertisements.

The present invention takes such problems into consideration, and aims to provide a network-distributed program receiving method and apparatus; an audience rating survey system; a recording medium recorded with an audience rating survey program; a recording medium recorded with a control program for a network-distributed program receiving apparatus; an audience rating survey method; and a control program for a network-distributed program receiving apparatus, allowing an effective and accurate audience rating survey of, for example, Internet broadcasting.

### DISCLOSURE OF THE INVENTION

The present invention registers a user ID which specifies a viewer/listener of a network-distributed program, and characteristic parameters that indicate characteristics of the viewer/listener, in a state of being associated with each other; acquires a user ID of a viewer/listener who is viewing/listening to the network-distributed program, a device ID which specifies its client terminal, a program ID which specifies the actual distributed program via a. predetermined communications network; and carries out an audience rating survey of the network-distributed program based on the user ID, device ID and program ID, and characteristic parameters associated with the user ID.

Here, the characteristic parameters indicating the characteristics of the viewer/listener are demographic information for which the viewer/listener has given consent for use of in the audience rating survey from a plurality of demographic information (the user's age, gender, occupation, hobby, annual income and address and such).

Namely, according to the present invention, an audience rating survey is actualized in consideration of the demographic information (the user's age, gender, occupation, hobby, annual income and address and such) of the viewer/listener.

Also according to the present invention, since the user ID, device ID and program ID are acquired via a predetermined communications network, an audience rating survey may be realized in real time in consideration of the demographic information.

### BRIEF DESCRIPTION OF THE DRAWINGS

FIG. 1 is a system block diagram showing the schematic structure of an audience rating survey system of an embodiment to which the present invention is applied.
FIG. 2 is a block diagram showing the schematic structure of an example of a client terminal of this embodiment.
FIG. 3 is a diagram showing an example of a selection screen for gathering demographic information indicated on the screen of a monitor of the client terminal.
FIG. 4 is a flow chart illustrating the process flow, from acquiring characteristic parameters through a survey server, acquiring and registering a user ID and device ID, through to providing client software to the client terminal.
FIG. 5 is a flow chart illustrating the process flow, from accessing the survey server in the client terminal, displaying the selection screen, transmitting the characteristic parameters, through to acquiring the client software.
FIG. 6 is a flow chart illustrating the process flow of running the client software at the client terminal while viewing/listening to an Internet-broadcasted program.
FIG. 7 is a flow chart illustrating the process flow of a case where a survey server actually is carrying out an audience rating survey.

### BEST MODE FOR CARRYING OUT THE INVENTION

### Brief Description of Audience Rating Survey Method of the Brief Description of Audience Rating Survey Method of Present Invention

To begin with, an audience rating survey method according to the present invention will be described in brief.

The audience rating survey method of the present invention is a method that allows the realization of an accurate audience rating survey in the case where such radio programs or television programs (Internet broadcasting) are viewed/listened to using a network-distributed program receiving device (hereafter referred to as a client terminal) that is connectable with a broad band communications network, such as the Internet, through the use of a user ID which specifies each viewer/listener (hereafter referred to as a user), a device ID which specifies each client terminal, and program IDs which specify each Internet-broadcasted program, as well as through the use of the demographic information registered in advance by the user.

Here, the user ID is unique identifying information that can specify each user, for example, the ID designated to each member of respective membership services distributing programs through Internet broadcasting, the ID recorded with the mobile phone number, credit card number, memory card and the like in each user's possession, and the ID that the user personally establishes (password). It is noted that the recorded ID of the user's memory card is used as the user ID in the embodiments of the present invention.

The device ID is unique identifying information of each terminal such as, an (EUI-64 or GUID) ID in the case of the client terminal being the so-called IEEE (The Institute of Electrical and Electronics Engineers) 1394 device, or a fixed IP address. It is noted that the IEEE 1394 GUID is used as the device ID in the embodiments of the present invention. In addition, the location where the client terminal is placed (address, district, etc.) and what type of the device it is and the like can be determined from this device ID.

The program ID is identifying information for specifying the Internet-broadcasted programs.

The demographic information includes parameters indicating the characteristics of the user viewing/listening to the program (hereafter referred to as characteristic parameters), such as for example, the user's age, gender, occupation, hobby, annual income and address (residential district or installation site of the client terminal), and includes information used for accurate compilation of the audience rating survey and determination of the effectiveness of the advertisements run in programs. It is noted that with the present invention, among each of the characteristic parameters such as age, gender and occupation, the only parameters actually used for the audience rating survey are those pieces of information for which the user has given consent for use in the audience rating survey. However, it can be considered that the more types of characteristic parameters (demographic information) used the more accurate, effective and precise the audience rating survey achieved may be. Namely, it is considered that, for example, in the case where an advertisement is run during a program, in order to accurately determine the effectiveness of this advertisement, it is necessary to know many characteristic parameters of the viewer/listener that is viewing/listening to that program, such as age, gender, occupation, hobby, annual income, address, and the like. Accordingly, in the embodiments of the present invention, a program giving the user incentives proportionate to the number of characteristic parameters provided by the user is employed so as to acquire as many characteristic parameters as possible from the user. In this embodiment, as an example of this incentive program, a prize award system is employed where, for example, if the number of characteristic parameters provided by the user is made to be the number of entries, there is a better chance of winning promotional gifts according to this number of entries. It is noted that this incentive program is not just a prize award system, but can also be actualized by using a computer program within an audience rating survey apparatus operated by an audience rating survey company, for example.

With the audience rating survey method of the present invention, through surveying which user at which terminal is viewing/listening to which Internet-broadcasted program based on a combination of the above user ID, device ID and program ID, as well as through carrying out an audience rating survey with consideration of the characteristic parameters already entered by the user viewing/listening to the program, not only can the compilation of just the number of viewers/listeners be carried out as in conventional audience rating surveys, but it also becomes possible to survey what ages, genders, occupations, hobbies, annual incomes and address of users are viewing/listening to which program.

### Schematic Structure of Audience Rating Survey System According to the Embodiments of the Present Invention

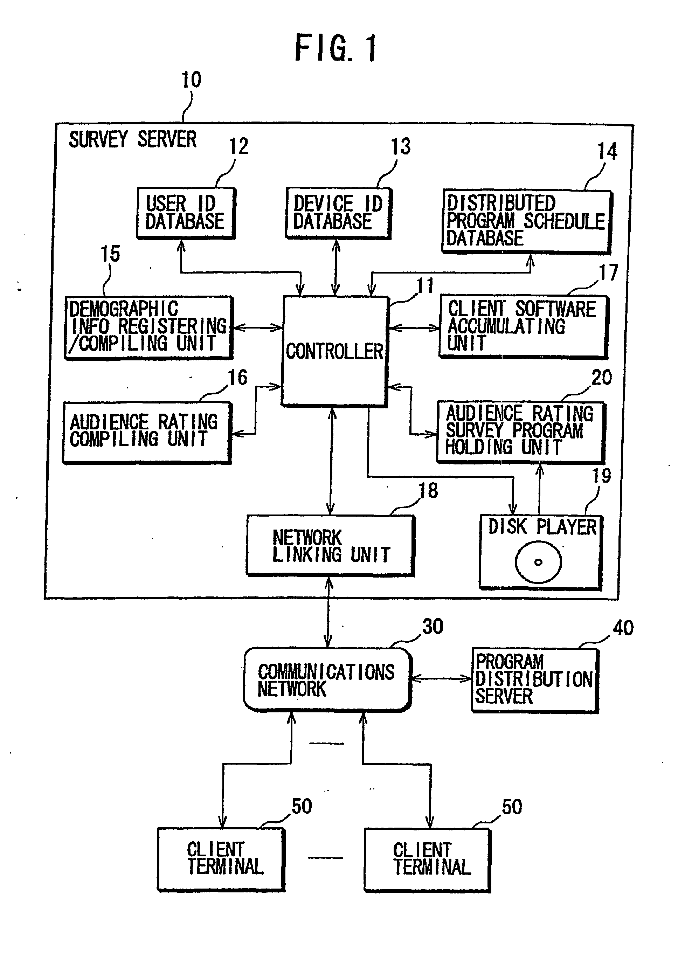

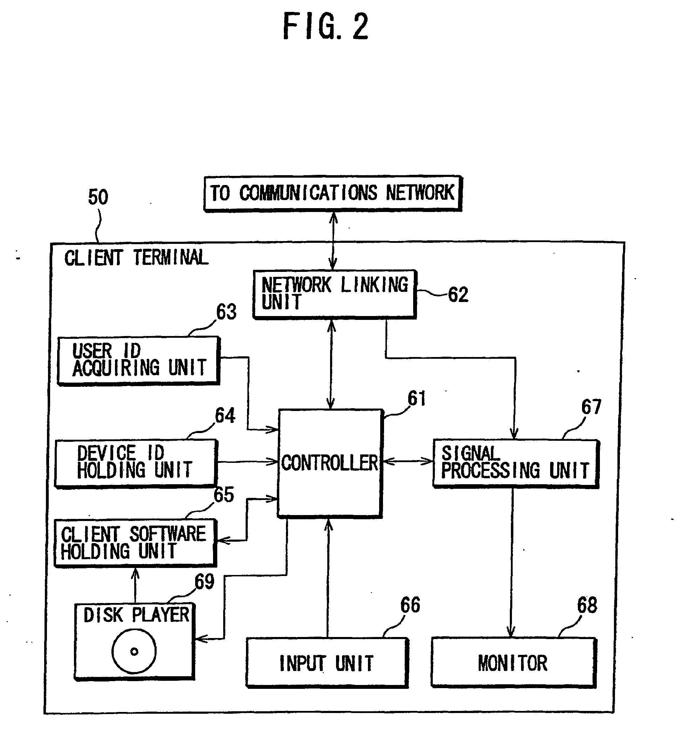

The schematic structure of an audience rating survey system of an embodiment actualizing an audience rating survey method of the present invention will be described in the following using FIG. 1 and FIG. 2.

FIG. 1 shows the entire structure of the audience rating survey system of this embodiment, and, for example, the detailed structure of a survey server 10 as an audience rating survey apparatus operated by a company conducting audience rating surveys.

In FIG. 1, the audience rating survey system of this embodiment comprises at least one survey server 10, program distribution server 40, communications network 30 which structures the Internet and the like, and a plurality of client terminals 50. The server 10, program distribution server 40, and client terminals 50 are made capable of being linked to the communications network 30.

The client terminals 50 are devices or systems with which each viewer/listener (user) of the Internet-broadcasted program can operate and view/listen to the program, including for example, personal computers, mobile phones, portable information processing devices or video game devices equipped with communication functions. The detailed structure and operations will be described later; however, by executing a control program for the network-distributed program receiving device of the present invention as the predetermined client software, these client terminals 50, for example, operate at every fixed time interval during viewing/listening of the program such that the program ID of the program being distributed (viewed/listened to by the user), the user ID acquired from the user, and the internally held device ID are transmitted (uploaded) to the survey server 10 via the communications network 30.

The program distribution server 40 may be operated by, for example, a company that distributes program content, and is a device or system that distributes various Internet-broadcasted programs via the communications network 30. It is noted that this program distribution server 40 carries out Internet broadcasting of program contents as well as transmitting the program ID of that program.

The survey server 10 may be operated by an audience rating survey company, for example, and is a device or system that surveys the audience ratings of the above Internet-broadcasted programs, which comprises as its principle components, a user ID database 12, a device ID database 13, a distributed-program schedule database 14, a demographic information registering/compiling unit 15, an audience rating compiling unit 16, a client software accumulating unit 17, a network linking unit 18, a disk player 19, an audience rating survey program holding unit 20, and a controller 11 which controls the operations of each of these components. Detailed steps of the controlling operations of this controller 11 will be described later.

The network linking unit 18 is interface means for linking to the communications network 30, such as the Internet. The client software accumulating unit 17 accumulates the predetermined client software executed when the client terminal 50 is used to view/listen to the program.

The user IDs of a plurality of viewers/listeners receiving the Internet broadcast are databased and accumulated in the user ID database 12. The device IDs of a plurality of client terminals 50 receiving the Internet broadcast are databased and accumulated by the device ID database 13. The demographic information registering/compiling unit 15 registers and compiles the characteristic parameters (demographic information) entered in advance by each user, and the user ID, in a state of being associated with each other.

The distributed-program schedule database 14 acquires the broadcasting schedule of each program (hereafter referred to as program schedule) distributed through the program distribution server 40 and the program IDs of each program, and databases the associations between these program IDs and program schedules to accumulate them.

The audience rating compiling unit 16 compiles the audience rating of the network broadcasted programs based on the user IDs, device IDs and program IDs that are uploaded every fixed time interval from the client terminals 50 by executing the predetermined client software therewith; the user IDs, device IDs and program IDs accumulated in each of the databases 12, 13 and 14; and the characteristic parameters held in the demographic information registering/compiling unit 15.

When, for example, a recording medium such as a CD-ROM or DVD-ROM recorded with the audience rating survey program of this embodiment is loaded, the disk player 19 reads the audience rating survey program from that recording medium under the control of the controller 11.

The audience rating survey program holding unit 20 holds the audience rating survey program of this embodiment that the disk player 19 has read from the recording medium. It is noted that the audience rating survey program held by the audience rating survey program holding unit 20 may also be acquired from, for example, program-sponsoring vendors and the like via the network 30.

Meanwhile, a client terminal 50 has a configuration such as that shown in FIG. 2.

Namely, a client terminal 50 comprise as the principle components, a network linking unit 62, a user ID acquiring unit 63, a device ID holding unit 64, a client software holding unit 65, an input unit 66, a signal processing unit 67, a monitor 68, a disk player 69, and a controller 61 which controls the operations of each of these principle components. It is noted that detailed steps of the controlling operation of this controller 61 will be described later.

The network linking unit 62 is interface means for linking to the communications network 30, such as the Internet. The client software holding unit 65 is recording means for holding predetermined client software that has been downloaded from the survey server 10 via, for example, the communications network 30.

It is noted that in this embodiment, an example is given where the predetermined client software is downloaded from the survey server 10 and provided to client terminals 50; however, the client software may also be provided to the client terminals 50 by recording medium such as, for example, a CD-ROM or a DVD-ROM. In this case, the recording medium upon which the client software is recorded is loaded into the disk player 69. The disk player 69 reads the client software from this recording medium under the control of the controller 61. In addition, the client software holding unit 65 holds the client software that has been read from this recording medium.

The user ID acquiring unit 63 has a configuration for acquiring the user IDs. In an example of this embodiment, the ID recorded in the memory card in the possession of the user is used as the user ID; accordingly, the user ID acquiring unit 63 acquires the user ID by reading the ID recorded on the memory card.

The device ID holding unit 64 is storing means for holding the pre-established device ID of the client terminals 50. In an example of this embodiment, the client terminals 50 are made to be IEEE 1394 devices; accordingly, the device ID holding unit 64 holds the device ID as an IEEE 1394 GUID.

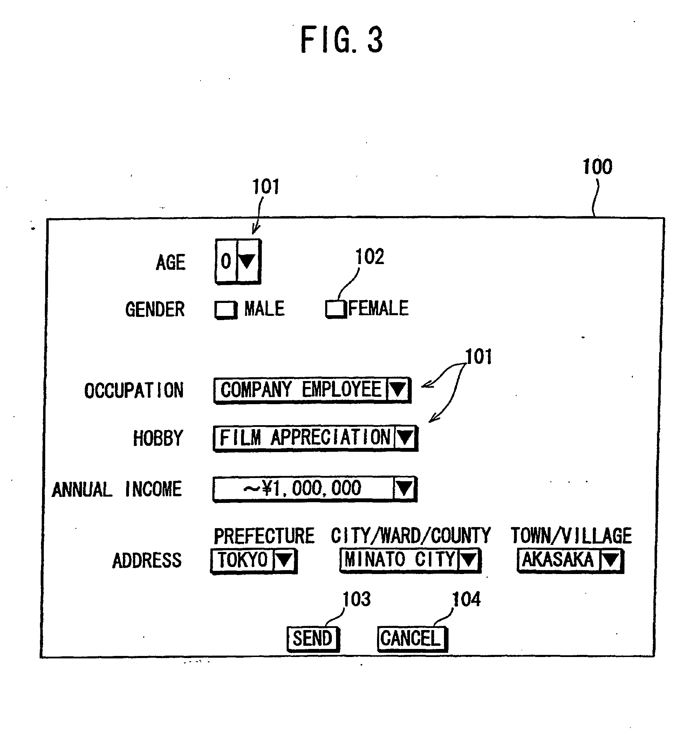

The signal processing unit 67 receives the program data that is distributed from the program distribution server 40, and the data used for display of the selection screen shown in FIG. 3, which the survey server 10 has transmitted for gathering characteristic parameters (demographic information), and converts them into visual signals and audio signals so as to transmit to the monitor 68. As a result, through the monitor 68, the images and sound of the program are output (displayed and produced, respectively), and the images and such of the selection screen of FIG. 3 are output (displayed).

The input unit 66 is used by the user to select (enter) each selection option displayed upon the selection screen; for example, it can be an operation controller or a mouse so as to operate the cursor keys displayed upon the screen.

Here, each of the selection options, such as age, gender, occupation, hobby, annual income and address, for example, are displayed upon a selection screen 100 shown in FIG. 3, which is used for gathering the characteristic parameters. Each of these selection options is comprised of, for example, entries that may have a minimum requirement and that allowing to optionally enter, and with each selection option there is displayed, for example, what is referred to as a drop-down list box 101 or check box 102 or the like, where it is possible for the user to enter (select) characteristic parameters using these boxes 101 and 102. With the audience rating survey system of this embodiment, in the state of each of the selecting entries having been entered, when the user presses (clicks) a send button 103, it is interpreted as the user giving consent for use of the characteristic parameters (demographic information) corresponding to each of the input selection options in the audience rating survey (consent for disclosure to the audience rating survey companies). It is noted that a cancel button 104 is provided on the selection screen 100 for canceling the transmission. Moreover, it is possible for each characteristic parameter for which the user has initially given consent to be changed (added or deleted) at a later time according to the user's volition.

### Flow of Audience Rating Survey in Audience Rating Survey System According to the Embodiments of the Present Invention (Preliminary Processing of Audience Rating Survey in Survey Server)

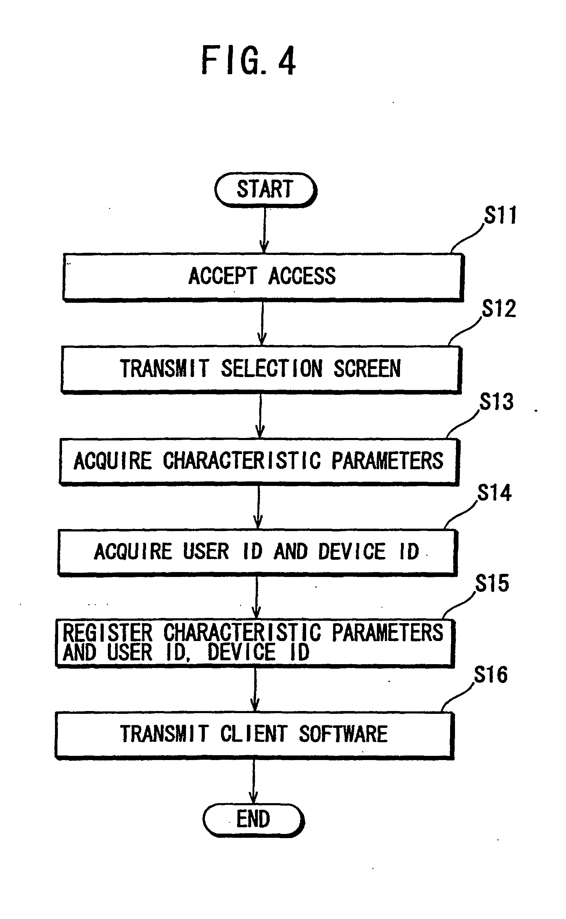

FIG. 4 shows the process flow of acquiring characteristic parameters (demographic information) by the survey server 10, acquiring and recording the user IDs and device IDs, and providing client software to client terminals 50. The process shown in FIG. 4 is the processing involved in the stage before actually carrying out the audience rating survey. It is noted that the flow chart illustrated in FIG. 4 is mainly the process carried out by the controller 11 of the survey server 10 based on the audience rating survey program of the present invention, which is a computer program. Moreover, the flow chart of FIG. 4 is the process flow in the case where the client software is transmitted (downloaded) from the survey server 10 to the client terminals 50.

In FIG. 4, the controller 11 of the survey server 10 accepts participative access of the audience rating survey from the client terminals 50 via the communications network 30 and network linking unit 18 as the processing in initial step S11. Then, in the processing during second step S12, the data used for the selection screen display, which is used for gathering characteristic parameters previously mentioned in FIG. 3, is transmitted to the client terminals 50 that have gained access. As a result, the selection screen 100 is displayed as shown in FIG. 3 through the monitor 68 of these client terminals 50. It is noted that data used for the selection screen display to the client terminals is transmitted not only when access for participation in the audience rating survey is gained from each client terminal, may also be transmitted to, for example, client terminals that have been randomly selected by the survey server 10 out of the plurality of client terminals that are receiving Internet broadcast distribution. In this sort of case where client terminals are randomly selected, since users other than those that hope to participate in the audience rating survey are also allowed to participate in the audience rating survey, a more balanced audience rating survey may be achieved.

Next, the controller 11 acquires the characteristic parameters that have been transmitted from the client terminals 50 in the processing of step S13, and further acquires device IDs of the client terminals 50 that have transmitted the characteristic parameters and the user IDs of the users operating these terminals 50 in the processing of step S14.

Moreover, in the processing of step S15, the controller 11 associates the acquired characteristic parameters with the user IDs and registers them with the demographic information registering/compiling unit 15, and registers the user IDs in the user ID database 12 and the device IDs in the device ID database 13.

Afterward, in the processing of step S16, the client software is transmitted, for example, after compression thereof, to the client terminals 50 that have sent the characteristic parameters, user IDs and device IDs. It is noted that when client software is provided via recording medium, the controller 11 transmits to the client terminals 50 the data necessary for input of, for example, the address, contact telephone number, and the like of the recipient of the recording medium. Later, this information including the address, contact telephone number, and the like of the recipient will be passed on from the survey server 40 to, for example, a recording medium distribution company. The recording medium distribution company which received the information including the address, contact telephone number, and the like, sends the recording medium upon which the client software has been recorded to the users of the client terminals 50 through, for example, the postal service and the like. Accordingly, the client terminals 50 are able to receive the recording medium upon which the client software has been recorded.

### (Preliminary Processing of Audience Rating Survey in Client Terminals)

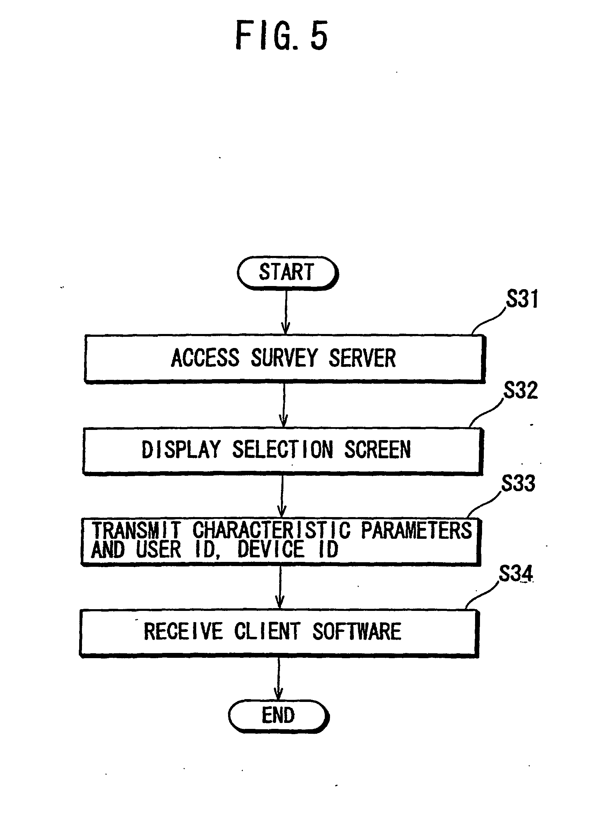

Next, the process flow of gaining access to the survey server 10, displaying the selection screen, transmitting the characteristic parameters (demographic information), and acquiring the client software, by the client terminals 50 is shown in FIG. 5. The process shown in FIG. 5 is processing involved in the stage before actually carrying out the audience rating survey. It is noted that the process illustrated in FIG. 5 is that carried out mainly by the controller 61 of the client terminals 50 based on access/browse software (also referred to as WWW browsing software) of the Internet. Furthermore, the flowchart of FIG. 5 is the process flow in the case where the client software is transmitted (downloaded) from the survey server 10 to the client terminals 50.

As shown in FIG. 5, in the processing of initial step S31, the controller 61 of the client terminals 50 accesses the survey server 10 via the communications network 30 and network linking unit 62, and receives the data used for the selection screen display, which is used for gathering characteristic parameters previously mentioned in FIG. 3 that have been transmitted from the survey server 10. Through this, the selection screen 100 shown in FIG. 3 comes to be displayed through the monitor 68 of these client terminals 50 in the processing of step S32.

Next, in the processing of step S33, the controller 61 transmits the characteristic parameters entered upon the selection screen 100 by the users operating the input unit 66, the user IDs acquired by the user ID acquiring unit 63, and the device IDs that are held by the device ID holding unit 64 to the survey server 10 via the network linking unit 62 and communications network 30.

Afterwards in the processing of step S34, the controller 61 receives (downloads) the client software that is sent from the survey server 10, and accumulates it within the client software holding unit 65. After the downloaded client software is decompressed, it comes to be installed into the client terminals 50. It is noted that in the case where the client software is provided as a recording medium, the controller 61 controls the disk player 69, reads the client software from that recording medium, and then holds it in the client software holding unit 65.

### (Flow of Processing of the Client Software at the Client Terminals)

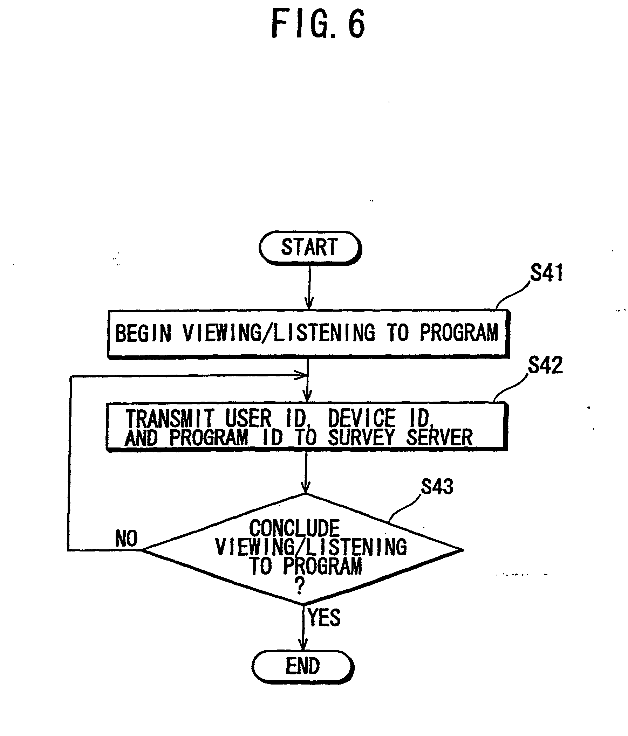

FIG. 6 shows the process flow of carrying out the client software installed into the client terminals 50 in the case where the users are actually viewing/listening to an Internet broadcasted program using the client terminals 50. It is noted that the flow chart illustrated in FIG. 6 is the process that the controller 61 of the client terminals 50 mainly carries out based on the client software. Furthermore, the client software monitors, as resident software, whether or not Internet-broadcasted programs are being viewed by the client terminals 50.

In this FIG. 6, in the processing of initial step S41, the controller 61 of the client terminals 50 starts the viewing/listening of the Internet-broadcasted program that the program distribution server 40 distributes via the communications network 30 and network linking unit 62, and in step S42, transmits (uploads) to the survey server 10 the user IDs acquired through the user ID acquiring unit 63, the device IDs held in the device ID holding unit 64 and the program IDs of the programs that are being viewed/listened to every fixed time interval.

Afterwards, in the processing of step S43, the controller 61 determines whether or not the viewing/listening of the program has ended, repeating the process of steps S42 and S43 as long as the viewing/listening has not ended.

### (Flow of the Actual Audience Rating Survey in the Survey Server)

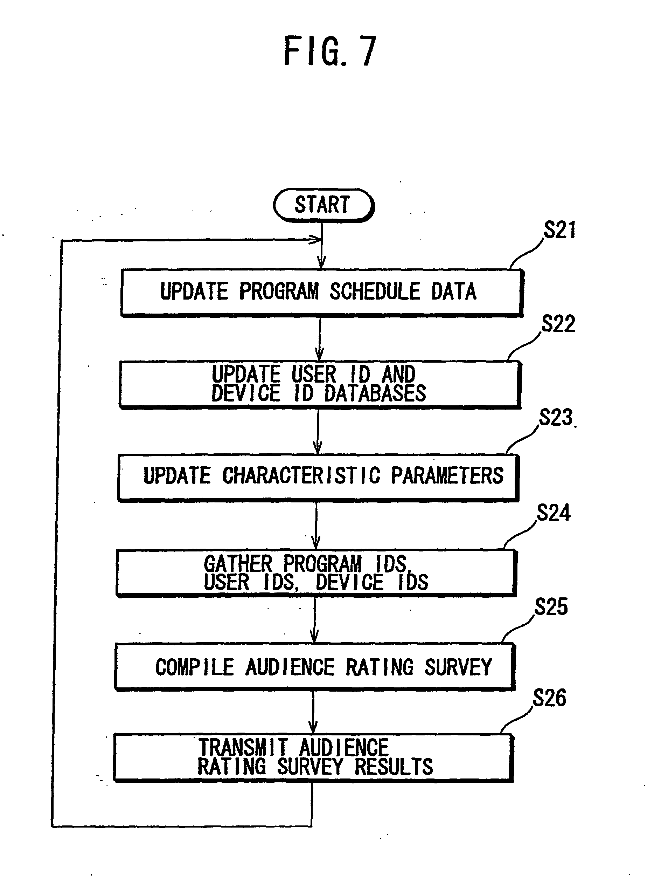

FIG. 7 shows a flow of the process when the survey server 10 actually carries out the audience rating survey. It is noted that the flowchart illustrated in this FIG. 7 is the process that the controller 11 of the survey server 10 or audience rating compiling unit 16, for example, mainly carries out based on the audience rating survey program of the present invention, which is being held in the audience rating survey program holding unit 20.

In FIG. 7, in the processing of initial step S21, the controller 11 of the survey server 10 acquires the program schedule data of the Internet-broadcasted programs from the program distribution server 40 via the communications network 30 and network linking unit 18, so as to update the distributed-program schedule database 14.

Furthermore, in the processing of step S22, in order to correspond to cases where participation in the audience rating survey from new users or client terminals or oppositely withdrawal therefrom, the controller 11 updates the user IDs which are registered in the user ID database 12, and the device IDs which are registered in the device ID database 13, as needed.

Similarly, in the processing of step S23, in order to correspond to cases where changes (addition or deletion) in already registered characteristic parameters are requested by the user, the controller 11 updates the characteristic parameters registered in the demographic information registering/compiling unit 15 as needed.

Next, in the processing of step S24, the controller 11 receives the user IDs, device IDs and program IDs that are sent at every fixed time interval from the client terminals 50 where the users are viewing/listening to the Internet-broadcasted program, and then transmits the received IDs to the audience rating compiling unit 16.

In the processing of step S25, the audience rating compiling unit 16 compares each ID stored in the respective databases 12, 13 and 14 to the received user IDs, device IDs and program IDs; retrieves the characteristic parameters registered with the demographic information registering/compiling unit 15; and carries out real time compilation of the audience rating based on the demographic information such as the user's age, gender, hobby, occupation, annual income, and address, utilizing the retrieved characteristic parameters and user IDs, and the device IDs and program IDs. In other words, the audience rating compiling unit 16 finds out, for example, what age, which gender, what sort of hobbies, what occupation, how much annual income, and which address of user is viewing/listening to the Internet-broadcasted programs as the results of the audience rating compilation.

Afterwards, in the processing of step S26, the controller 11 transmits the results of the audience rating total that has been compiled by the audience rating compiling unit 16 to, for example, the program distribution company which operates a program distribution server 40, or to the advertisers that are sponsoring each program. As a result, the program distribution companies and the advertisers can know the audience ratings for those programs, and estimate the advertising effectiveness of the advertisements run with those programs.

It is noted that it is also possible to transmit the above results of the audience rating compilation to those client terminals 50 viewing/listening to the above Internet-broadcasted programs. In this manner, in the case where the audience rating survey results are transmitted to the client terminals 50, for example, if the audience rating survey results are displayed through the monitor 68 of these client terminals 50, the user is able to know what other sorts of people are viewing the program that the user is viewing.

### CONCLUSION OF THE EMBODIMENT

As described above, according to the audience rating survey system of the embodiments of the present invention, an audience rating survey taking into account the demographic information the audience rating survey company desires can be carried out in real time within limits the user has agreed upon the audience rating survey, thus allowing an effective and accurate audience rating survey for Internet broadcasting.

Namely, according to this embodiment, not only is the number of viewers/listeners compiled as with conventional audience rating surveys, but may be the audience rating survey carried out in real time while considering demographic information. Furthermore, program distribution companies delivering the Internet-broadcasted programs, and the advertisers running, for example, advertisements with these programs, are allowed to obtain accurate information regarding the users actually viewing those programs and advertisements. As a result, the program distribution companies can set the appropriate advertisement placement rate for these programs, and the advertisers can set the contents of the advertisements run with these programs to the contents optimized depending on the characteristics of the user viewing/listening to the programs.

Moreover, audience rating surveys for programs broadcasted through conventional broadcasting media have established exclusive hardware for audience rating surveying at, for example, a limited number of households randomly selected by an audience rating survey company, and have been carried out solely based on information (number of viewers/listeners) acquired by these limited numbers of exclusive hardware for audience rating surveying. However, according to an audience rating survey system of the embodiments of the present invention, candidates for participation in the audience rating survey may be recruited on the Internet, and as long as the user has access to the Internet, any type of user may participate in the audience rating survey, which allow the survey for abundant users. Moreover, according to the embodiment, the recruitment of the users for participation in the audience rating survey may be accelerated by the above-described incentive program.

It is noted that the embodiment described above is an example of the present invention. As a result, this description of the present invention is not limited by the above embodiments, and needless to say that various modifications thereto according to design and such can be made without deviating from the technical spirit and scope of the present invention.

### INDUSTRIAL APPLICABILITY

The present invention is applicable to, for example, an audience rating survey of Internet broadcasting.

## Claims

1. An audience rating survey method, comprising the steps of:
associatedly registering a user ID which specifies an audience of a network-distributed program and characteristic parameters which indicate characteristics of the audience;
acquiring a user ID of an audience who is receiving the network-distributed program, a device ID which specifies a client terminal receiving the network-distributed program, and a program ID which specifies the network-distributed program, via a predetermined communications network; and
performing an audience rating survey of the network-distributed program based on the acquired user ID, device ID and program ID, and characteristic parameters associated with the acquired user ID.

2. The audience rating survey method according to claim 1, further comprising the steps of:
setting demographic information for which the audience has given consent for use of in an audience rating survey as the characteristic parameters;
retrieving characteristic parameters associated with the acquired user ID out of the registered characteristic parameters; and
utilizing the characteristic parameters acquired by the retrieval during the audience rating survey.

3. The audience rating survey method according to claim 2, further comprising the steps of:
providing to the client terminal so as to display selection screen information for the audience to select demographic information for which to give consent for use in the audience rating survey from a plurality of demographic information ; and
registering the selected demographic information used as the characteristic parameters, for which the audience has given consent, associatedly with corresponding user ID that specifies the audience.

4. The audience rating survey method according to claim 3, further comprising the step of:
establishing benefits corresponding to the number of the selected demographic information.

5. The audience rating survey method according any one of claims 1 to 4, further comprising the step of:
acquiring every fixed time interval the user ID, device ID and program ID.

6. The audience rating survey method according to any one of claims 1 to 5, further comprising the step of:
updating the characteristic parameters as needed.

7. The audience rating survey method according to any one of claims 1 to 6, wherein
the Internet is used as the predetermined communications network.

8. An audience rating survey apparatus, comprising:
a network linking unit, that links to a predetermined network;
a characteristic parameter registering unit, that associatedly registers a user ID specifying an audience of a network-distributed program and characteristic parameters indicating characteristics of the audience;
an ID acquiring unit, that acquires via a predetermined communications network, a user ID of an audience who is receiving the network-distributed program, a device ID which specifies a client terminal receiving the network-distributed program, and a program ID which specifies the network-distributed program ; and
an audience rating survey unit, that performs an audience rating survey of the network-distributed program based on the acquired user ID, device ID and program ID, and characteristic parameters associated with the acquired user ID.

9. The audience rating survey apparatus according to claim 8, wherein
the characteristic parameter registering unit sets demographic information for which the audience has given consent for use of in an audience rating survey as the characteristic parameters, and registers the characteristic parameters associatedly with the user ID which specifies the audience; and
the audience rating survey unit retrieves characteristic parameters associated with the acquired user ID out of the registered characteristic parameters, and utilizes the characteristic parameters acquired by the retrieval during the audience rating survey.

10. The audience rating survey apparatus according to claim 9, further comprising:
a selection screen information providing unit, that provides to the client terminal so as to display selection screen information for the audience to select demographic information for which to give consent for use of in the audience rating survey from a plurality of demographic information; and
wherein the characteristic parameter registering unit registers the selected demographic information used as the characteristic parameters, for which the audience has given consent, associatedly with corresponding user ID that specifies the audience.

11. The audience rating survey apparatus according to any one of claims 8 to 10, wherein
the ID acquiring unit acquires every fixed time interval the user ID, device ID, and program ID.

12. The audience rating survey apparatus according to claim 11, further comprising:
a program providing unit, that provides a computer program for uploading the user ID, device ID and program ID every fixed time interval by downloading to the client terminal.

13. The audience rating survey apparatus according to any one of claims 8 to 12, further comprising:
a parameter updating unit, that updates the characteristic parameters as needed.

14. The audience rating survey apparatus according to any one of claims 8 to 13, wherein
the network linking unit links to the Internet as the predetermined communications network.

15. A network-distributed program reception method, comprising the steps of:
holding a device ID, that specifies itself;
acquiring a user ID, that specifies an audience of a network-distributed program;
receiving a network-distributed program that is distributed via a predetermined network;
acquiring a program ID of the received network-distributed program; and
transmitting every fixed time interval the user ID, device ID and program ID to a predetermined audience rating survey apparatus, that performs an audience rating survey, while the network-distributed program is being received.

16. The network-distributed program reception method according to claim 15, further comprising the steps of:
providing for display a selection screen for the audience to select demographic information for which to give consent for use of in an audience rating survey from a plurality of demographic information;
acquiring as characteristic parameters that indicate characteristics of the audience the demographic information selected by the audience out of the plurality of demographic information provided on the selection screen; and
transmitting the characteristic parameters along with the user ID to the predetermined audience rating survey apparatus.

17. The network-distributed program reception method according to claim 16, further comprising the steps of:
updating the characteristic parameters as needed, and
transmitting the updated characteristic parameters to the predetermined audience rating survey apparatus.

18. The network-distributed program reception method according to any one of claims 15 to 17, wherein
the Internet is used as the predetermined communications network.

19. A network-distributed program receiving apparatus, comprising:
a device ID holding unit, that holds an device ID specifying itself;
a user ID acquiring unit, that acquires a user ID specifying an audience of a network-distributed program;
a network-distributed program receiving unit, that receives a network-distributed program that is distributed via a predetermined network;
a program ID acquiring unit, that acquires a program ID of the received network-distributed program; and
an ID transmitting unit, that transmits the user ID, device ID and program ID to a predetermined audience rating survey apparatus that performs an audience rating survey every fixed time interval while the network-distributed program is being received.

20. The network-distributed program receiving apparatus according to claim 19, further comprising:
a selection screen providing unit, that provides for display a selection screen for the selecting of demographic information that the audience has consented for use in an audience rating survey out of a plurality of demographic information;
an input unit with which an instructed inputting operation is performed by the audience;
a characteristic parameter acquiring unit, that acquires as characteristic parameters that indicate characteristics of the audience, the demographic information selected according to the instructed input operation of the input unit by the audience from the plurality of demographic information provided upon the selection screen; and
wherein the characteristic parameters are transmitted to the predetermined audience rating survey apparatus along with the user ID from the ID transmitting unit.

21. The network-distributed program receiving apparatus according to claim 20, wherein
the characteristic parameters acquiring unit updates the characteristic parameters as needed, and
the ID transmitting unit transmits the updated characteristic parameters to the predetermined audience rating survey apparatus.

22. The network-distributed program receiving apparatus according to any one of claims 19 to 21, further comprising:
a program accumulating unit, that receives via the predetermined network so as to accumulate a computer program for transmitting the user ID, device ID and program ID every fixed time interval to the predetermined audience rating survey apparatus.

23. The network-distributed program receiving apparatus according to any one of claims 19 to 22, wherein
the network linking unit links to the Internet as the predetermined communications network.

24. An audience rating survey system, comprising:
a network-distributed program receiving apparatus, comprising:
a device ID holding unit, that holds a device ID specifying itself;
a user ID acquiring unit, that acquires a user ID specifying an audience of a network-distributed program;
a network-distributed program receiving unit, that receives a network-distributed program that is distributed via a predetermined network;
a program ID acquiring unit, that acquires a program ID of the received network-distributed program; and
an ID transmitting unit, that transmits the user ID, device ID and program ID to an audience rating survey apparatus which performs an audience rating survey every fixed time interval while the network-distributed program is being received; and
an audience rating survey apparatus comprising:
a network linking unit, that links to a predetermined network;
a characteristic parameter registering unit, that associatedly registers a user ID specifying an audience of the network-distributed program and characteristic parameters indicating characteristics of the audience;
an ID acquiring unit, that acquires the user ID, device ID and program ID having been transmitted from the network-distributed program receiving apparatus; and
an audience rating survey unit, that performs an audience rating survey of the network-distributed program based on the acquired user ID, device ID and program ID, and characteristic parameters associated with the acquired user ID.

25. The audience rating survey system according to claim 24,
wherein
the characteristic parameter registering unit of the audience rating survey apparatus sets demographic information for which the audience has given consent for use of in an audience rating survey as the characteristic parameters, and registers the characteristic parameters associatedly with the user ID which specifies the audience; and
the audience rating survey unit retrieves characteristic parameters associated with the acquired user ID from the registered characteristic parameters, and utilizes the characteristic parameters acquired by the retrieval during the audience rating survey.

26. The audience rating survey system according to claim 25, wherein
the audience rating survey apparatus comprises a selection screen information providing unit, that provides to the client terminal so as to display selection screen information for the audience to select demographic information for which to give consent for use of in the audience rating survey from a plurality of demographic information; and
the characteristic parameter registering unit registers as the characteristic parameters the selected demographic information for which the audience has given consent, associatedly with the user ID specifying the audience.

27. The audience rating survey system according to claim 26, wherein
the network-distributed program receiving apparatus comprises:
a selection screen providing unit, that provides the selection screen for display;
an input unit with which an instructed inputting operation is performed by the audience; and
a characteristic parameter acquiring unit, that acquires as characteristic parameters indicating characteristics of the audience, the demographic information selected according to the instructed input operation of the input unit by the audience from the plurality of demographic information provided for display upon the selection screen; and
the characteristic parameters are transmitted to the audience rating survey apparatus along with the user ID from the ID transmitting unit.

28. The audience rating survey system according to claim 27, wherein
the audience rating survey apparatus comprises a program providing unit, that provides by downloading to the network-distributed program receiving apparatus a computer program for uploading every fixed time interval the user ID, device ID and program ID.

29. The audience rating survey system according to claim 28, wherein
the network-distributed program receiving apparatus comprises a program accumulating unit, that accumulates the computer program downloaded from the audience rating survey apparatus.

30. The audience rating survey system according to any one of claims 24 to 29, wherein
the network-distributed program receiving apparatus transmits updated characteristic parameters to the audience rating survey apparatus as needed.

31. The audience rating survey system according to any one of claims 24 to 30, wherein
the Internet is used as the predetermined communications network.

32. A computer-readable recording medium recorded with an audience rating survey program to be executed by a computer,
the audience rating survey program comprising:
a characteristic parameter registering step of associatedly registering a user ID which specifies an audience of a network-distributed program and characteristic parameters that indicate characteristics of the audience;
an ID acquiring step of acquiring a user ID of an audience who is receiving the network-distributed program; a device ID which specifies a client terminal receiving the network-distributed program; and a program ID which specifies the network-distributed program, via a predetermined communications network; and
a surveying step of performing an audience rating survey of the network-distributed program based on the acquired user ID, device ID and program ID, and characteristic parameters associated with the acquired user ID.

33. The computer-readable recording according to claim 32,
the audience rating survey program, further comprising:
a step of setting demographic information for which the audience has given consent for use of in an audience rating survey as the characteristic parameters;
a step of retrieving characteristic parameters associated with the acquired user ID out of the registered characteristic parameters; and
wherein the surveying step utilizes the characteristic parameters acquired by the retrieval during the audience rating survey.

34. The computer-readable recording medium according to claim 33, the audience rating survey program further comprising:
a step of providing to the client terminal so as to display selection screen information for the audience to select demographic information for which to give consent for use of in the audience rating survey from a plurality of demographic information; and
a step of registering the selected demographic information used as the characteristic parameters, for which the audience has given consent, associatedly with corresponding user ID that specifies the audience.

35. The computer-readable recording medium according to claim 34,
the audience rating survey program, further comprising:
a step of establishing benefits corresponding to the number of the selected demographic information.

36. The computer-readable recording medium according to any one of claims 32 to 35,
the audience rating survey program, further comprising:
a step of acquiring every fixed time interval the user ID, device ID and program ID.

37. The computer-readable recording medium according to any one of claims 32 to 36,
the audience rating survey program, further comprising:
a step of updating the characteristic parameters as needed.

38. The computer-readable recording medium according to any one of claims 32 to 37,
wherein, in the ID acquiring step, the Internet is used as the predetermined communications network.

39. A computer-readable recording medium recorded with a control program for a network-distributed program receiving apparatus, the control program to be executed by a computer comprising:
an ID holding step of holding an device ID specifying itself;
a user ID acquiring step of acquiring a user ID specifying an audience of a network-distributed program;
a program receiving step of receiving a network-distributed program distributed via the predetermined network;
a program ID acquiring step of acquiring the program ID of the received network-distributed program; and
an ID transmitting step of transmitting every fixed time interval the user ID, device ID and program ID to a predetermined audience rating survey apparatus, that performs an audience rating survey, while the network-distributed program is being received.

40. The computer-readable recording medium according to claim 39,
the control program, further comprising:
a step of providing so as to display a selection screen for the audience to select demographic information for which to give consent for use of in an audience rating survey from a plurality of demographic information;
a step of acquiring as characteristic parameters that indicate characteristics of the audience the demographic information selected by the audience from the plurality of demographic information provided on the selection screen; and
wherein, in the ID transmitting step, the characteristic parameters are transmitted along with the user ID to the predetermined audience rating survey apparatus.

41. The computer-readable recording medium according to claim 40,
the control program, further comprising:
a step of updating the characteristic parameters as needed, and
wherein, in the ID transmitting step, the updated characteristic parameters are transmitted to the predetermined audience rating survey apparatus.

42. The computer-readable recording medium according to any one of claims 39 to 41,
wherein, in the program receiving step, the network-distributed program is received via the Internet as the predetermined communications network.

43. An audience rating survey program to be executed by a computer, comprising:
a characteristic parameter registering step of associatedly registering a user ID which specifies an audience of a network-distributed program and characteristic parameters that indicate characteristics of the audience;
an ID acquiring step of acquiring a user ID, which specifies the audience of the network-distributed program; a device ID which specifies a client terminal receiving the network-distributed program; and a program ID which specifies the network-distributed program via a predetermined communications network; and
a surveying step of performing an audience rating survey of the network-distributed program based on the acquired user ID, device ID and program ID, and characteristic parameters corresponding to the acquired user ID.

44. A control program of a network-distributed program apparatus, which is to be executed by a computer, comprising:
a device ID acquiring step of acquiring a device ID specifying itself;
a user ID acquiring step of acquiring a user ID specifying an audience of a network-distributed program;
a network-distributed program receiving step of receiving a network-distributed program to be distributed via a predetermined network;
a program ID acquiring step of acquiring a program ID of the received network-distributed program; and
an ID transmitting step of transmitting every fixed time interval the user ID, device ID and program ID to a predetermined audience rating survey apparatus, that performs an audience rating survey, while the network-distributed program is being received.
